# EUROPÄISCHE PATENTSCHRIFT

(11) **EP 2 783 791 B1**
(45) Veröffentlichungstag und Bekanntmachung des Hinweises auf die Patenterteilung: **18.11.2015**
(21) Anmeldenummer: 13161309.3
(22) Anmeldetag: 27.03.2013
(51) Int. Cl.: B23Q 1/01, B23Q 11/00, H01L 21/60

(54) **Positioniereinrichtung in Portalbauweise**
Positioning device in the form of a portal
Dispositif de positionnement avec portique

(43) Veröffentlichungstag der Anmeldung: 01.10.2014
(73) Patentinhaber: ETEL S.A., 2112 Môtiers (CH)
(72) Erfinder: Heiniger, Laurent, 2052 Fontainemelon (CH); Mazerolle, Hélène, 1453 Mauborget (CH); Napoli, Michel, 2114 Fleurier (CH)
(74) Vertreter: Pleyer, Hans Anno

(56) Entgegenhaltungen:
- DE-A1-102005 001 845
- JP-A- 2002 093 856

## Beschreibung

Die vorliegende Erfindung betrifft eine Positioniereinrichtung zur Bearbeitung eines Werkstücks oder zur Platzierung von Komponenten in einer Ebene. Solche Positioniereinrichtungen dienen beispielsweise dazu, elektronische Komponenten auf einer Leiterplatte zu positionieren, oder auch um flache Werkstücke mit einem Werkzeug zu bearbeiten.

DE-102005001845-A offenbart eine Positioniereinrichtung nach dem Oberbegriff des Anspruchs 1.

Aus der EP 2066996 B1 ist eine Positioniereinrichtung in Portalbauweise bekannt, bei der zwischen zwei parallelen Linearführungen ein Querbalken beweglich gelagert ist, auf welchem mittels einer weiteren Linearführung ein Funktionselement beweglich gelagert ist, so dass dieses Funktionselement in einer Ebene zwischen den beiden parallelen Linearführungen frei positionierbar ist. Als Funktionselement kommt beispielsweise ein Greifer eines Bestückungsautomaten, ein Laser eines Laser-Bearbeitungszentrums oder auch ein Tastsystem einer Koordinatenmessmaschine in Frage. Die genannte EP 2066996 B1 beschäftigt sich vor allem mit einer möglichst genauen Positionsmessung an solchen Positioniereinrichtungen, da eine genaue Positionierung des Funktionselementes oft sehr wichtig ist. Auch die DE 102009008900 A1 beschäftigt sich mit solchen Positioniereinrichtungen in Portalbauweise. Diese sind aus verschiedenen Gründen regelungstechnisch nicht einfach zu beherrschen. Es wird daher eine Einrichtung zum Regeln einer Positioniereinrichtung offenbart, mit der eine besonders genaue Positionierung möglich ist.

Wenn jedoch das Funktionselement, das am Querbalken geführt und über dem Werkstück positioniert wird, eine erhebliche Kraft auf das Werkstück ausüben muss, so kann dies dazu führen, dass die Bestandteile der Positioniereinrichtung deformiert werden. Wegen der großen Hebel, die durch die Portalbauweise entstehen, können dabei schon kleine Verformungen zu einem erheblichen Versatz des Angriffspunktes des Werkzeugs am Werkstück führen, der für Anwendungen mit hoher Anforderung an die Positioniergenauigkeit inakzeptabel ist. Ein Beispiel für eine solche Anwendung ist das Thermokompressionsbonden, bei dem elektronische Bauteile mittels Druck und Temperatur mit einer Leiterplatte verbunden werden. Hierzu können Kräfte bis zu 500 N nötig sein. Andererseits sind in solchen und vergleichbaren Anwendungen geforderte Positioniergenauigkeiten im Bereich von einem Mikrometer und darunter nicht ungewöhnlich.

Es ist daher Aufgabe der Erfindung, eine Positioniereinrichtung in Portalbauweise zu schaffen, die trotz hoher Prozesskräfte eine genaue Positionierung des Funktionselementes ermöglicht.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine Positioniereinrichtung in Portalbauweise beschrieben, mit zwei parallelen Linearführungen mit integrierten Linearantrieben, die je einen X-Laufwagen in einer X-Richtung beweglich halten, sowie mit einem mit den beiden X-Laufwagen verbundenen Querbalken, der mittels eines integrierten Linearantriebs einen Y-Laufwagen in einer zur X-Richtung senkrechten Y-Richtung beweglich hält. Die Positioniereinrichtung weist außerdem einen Werkzeughalter, auf, der am Y-Laufwagen in einer Z-Richtung geführt ist und ein Werkzeug zur Bearbeitung eines in einer X-Y-Ebene angeordneten Werkstücks trägt, wobei das Werkzeug in X-Richtung versetzt neben dem Querbalken angeordnet ist. Ein in Z-Richtung oberhalb des Werkzeugs angeordneter Kraftrahmen überträgt eine auf das Werkzeug wirkende Prozesskraft auf die Laufwagen.

Der Kraftrahmen sorgt also dafür, dass die eigentlich ungünstige Anordnung des Werkzeugs seitlich am Querbalken nicht zu einem Drehmoment führt, dass den Querbalken verformen und damit die Positioniergenauigkeit des Werkzeugs verschlechtern würde.

Die Prozesskraft wird von einem Pneumatikzylinder aufgebracht, der zwischen dem Kraftrahmen und dem Werkzeughalter wirkt, wobei der Angriffspunkt des Pneumatikzylinders am Werkzeughalter in X-Richtung versetzt ist zum Angriffspunkt der Prozesskraft am Werkzeug. Auf diese Weise wird im Werkzeughalter gezielt ein Drehmoment erzeugt, dass einem durch eine Asymmetrie des Werkzeughalters bedingten Drehmoment entgegen wirkt, so dass auch mit dieser Maßnahme die Positioniergenauigkeit erhöht wird.

Weitere Vorteile und Einzelheiten der vorliegenden Erfindung ergeben sich aus der nachfolgenden Beschreibung verschiedener Ausführungsformen anhand der Figuren. Dabei zeigt
- Figur 1: eine Positioniereinrichtung in Portalbauweise gemäß dem Stand der Technik,
- Figur 2: das im Stand der Technik auftretende Problem bei großen Prozesskräften,
- Figur 3: ein erstes Ausführungsbeispiel der Erfindung,
- Figur 4: ein zweites Ausführungsbeispiel der Erfindung,
- Figur 5: eine vorteilhafte Ausgestaltung der Erfindung, die eine besonders genaue Positionierung ermöglicht.

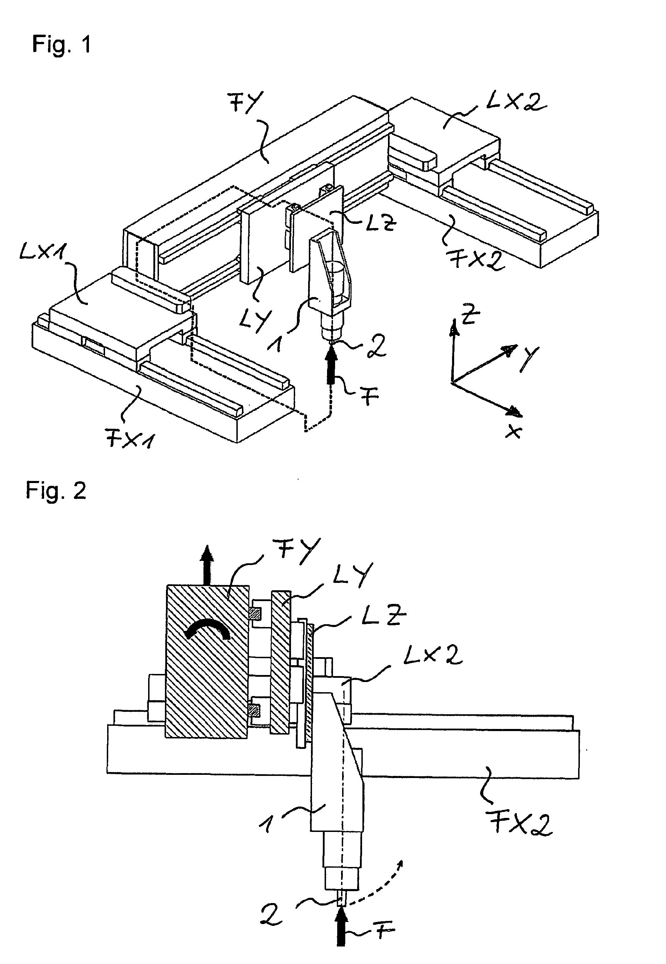

Die Figur 1 zeigt eine Positioniereinrichtung in Portalbauweise gemäß dem Stand der Technik. In einer X-Richtung liegen parallel zueinander zwei Linearführungen FX1, FX2 mit integrierten Linearantrieben, die zwei X-Laufwagen LX1, LX2 in X-Richtung beweglich halten. An den beiden Laufwagen LX1, LX2 befestigt ist eine Linearführung, die den Querbalken FY des Portalrahmens der Positioniereinrichtung bildet. Dieser Querbalken FY kann in X-Richtung über dem Arbeitsbereich zwischen den beiden Linearführungen FX1 und FX2 positioniert werden.

An der Linearführung FY ist ein Y-Laufwagen LY beweglich geführt, der mittels eines weiteren Linearantriebs zwischen den beiden Linearführungen FX1 und FX2 in Y-Richtung positioniert werden kann. Durch eine geeignete Ansteuerung der Antriebe in den Linearführungen FX1, FX2 und FY lässt sich der Y-Laufwagen LY frei über dem Arbeitsbereich zwischen den beiden Linearführungen FX1 und FX2 positionieren.

Der Y-Laufwagen LY trägt nun eine weitere Linearführung mit integriertem Antrieb, die einen Z-Laufwagen LZ in der Z-Richtung beweglich hält, die senkrecht auf die durch die X- und Y-Richtung aufgespannte Bearbeitungsebene steht.

Somit ist ein am Z-Laufwagen LZ befestigter Werkzeughalter 1 und ein von diesem gehaltenes Werkzeug 2 in allen drei Raumrichtungen X, Y und Z positionierbar. Beim Werkzeug 2 kann es sich beispielsweise um einen Greifer handeln, der ein elektronisches Bauelement aufnimmt und dieses auf eine im Arbeitsbereich abgelegte Leiterplatte setzt. Die hierfür nötige Kraft F wird vom Antrieb des Z-Laufwagens LZ aufgebracht. Da der Z-Laufwagen LZ in X-Richtung versetzt seitlich am Querbalken FY angeordnet ist, bewirkt diese vertikale Kraft F in Z-Richtung ein Drehmoment auf den Querbalken FY.

Mit der Bezeichnung "in X-Richtung versetzt" ist hier und in der übrigen Beschreibung ein Abstand in X-Richtung der Projektion zweier Elemente (hier des Querbalkens FY und des Z-Laufwagens LZ) in die X-Y-Ebene gemeint.

Mit einer gestrichelten Linie ist in der Figur 1 die Kraftschleife eingezeichnet, die beim Aufsetzen des Werkzeugs 2 auf das in der X-Y-Ebene angeordnete Werkstück die Bestandteile der Positioniereinrichtung belastet. Wie man erkennen kann, ist der Querbalken FY Bestandteil dieser Kraftschleife, was bei hohen Kräften Nachteile bringt.

Die Figur 2 zeigt einen Schnitt durch die Positioniereinrichtung der Figur 1. Der Schnitt liegt in der X-Z-Ebene und verläuft durch den Z-Laufwagen LZ. Man erkennt, dass durch eine große Prozesskraft F, wie sie beispielsweise beim thermoelektrischen Bonden eines Bauteiles auf eine Leiterplatte auftreten kann, wegen des sehr asymmetrischen Aufbaus der Positioniereinrichtung ein hohes Drehmoment auftritt, das den Querbalken FY des Portalrahmens verbiegen und so zu einer Auslenkung des Werkzeugs 2 führen kann. Diese Auslenkung ist mit einem gestrichelten Pfeil am Werkzeug 2 angedeutet. Beim Thermokompressionsbonden führt diese Auslenkung auch zu einer Verkippung eines zu platzierenden Bauteils, wodurch die geforderte hohe Parallelität zwischen Bauteil und Leiterplatte nicht eingehalten werden kann.

Eine einfache Lösung zur Vermeidung dieses Drehmomentes wäre ein bezüglich der Prozesskraft F symmetrischer Aufbau der Positioniereinrichtung. Es kann aber Anforderungen geben, die so einen symmetrischen Aufbau unmöglich machen. So kann es notwendig sein, dass die Linearführungen LX1, LX2 einen zweiten Querbalken mit einem zweiten Werkzeug tragen, das möglichst nahe an das erste Werkzeug 2 heran gebracht werden muss. Die beiden Werkzeuge müssen dann wie in den Figuren 1 und 2 dargestellt, seitlich an ihrem jeweiligen Querbalken angeordnet werden, um dieses Ziel zu erreichen.

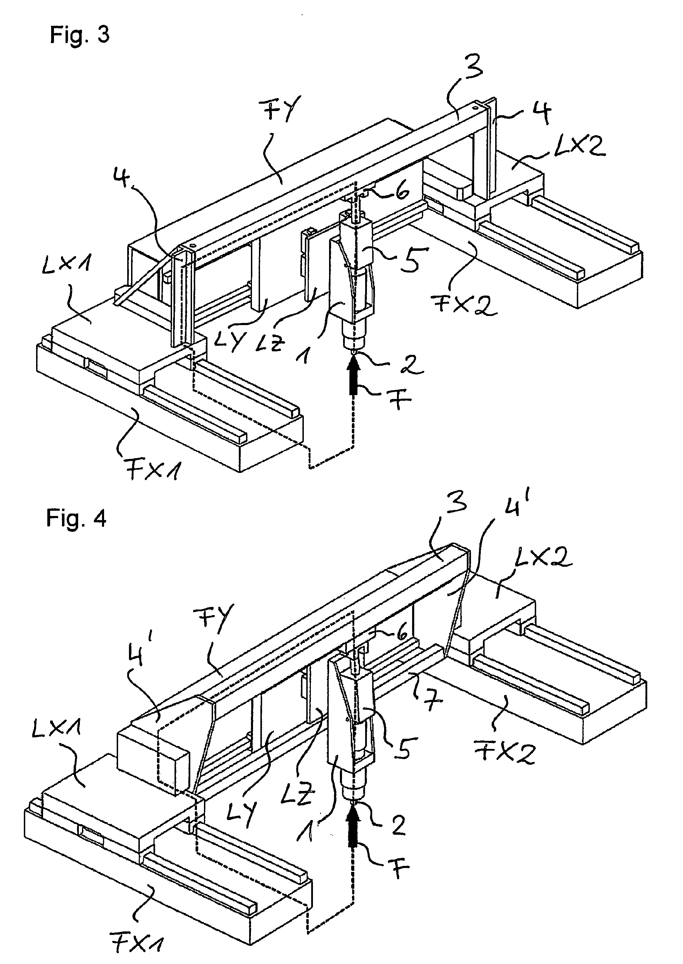

In der Figur 3 ist daher als erstes Ausführungsbeispiel eine Modifikation der herkömmlichen Positioniereinrichtung gezeigt.

Es kommt nun ein zusätzlicher Kraftrahmen 3 zum Einsatz. Dieser Kraftrahmen 3 verläuft parallel zum Querbalken FY des Portalrahmens. Seine Projektion in die X-Y Bearbeitungsebene liegt jedoch nicht (wie die Projektion des Querbalkens FY) weit neben dem Angriffspunkt der Prozesskraft F, sondern wesentlich näher an diesem Angriffspunkt, idealer Weise in Z-Richtung oberhalb dieses Angriffspunktes. An diesem Kraftrahmen 3 stützt sich ein Ende eines Pneumatikzylinders 5 ab, dessen anderes Ende mit dem Werkzeughalter 1 verbunden ist. Dieser Pneumatikzylinder 5 bringt nun den größten Teil der Prozesskraft F auf, die vom Kraftrahmen 3 aufgenommen und über Stützen 4 auf die Laufwagen LX1 und LX2 übertragen wird. Die Prozesskraft F muss also nicht vom Querbalken FY aufgenommen werden. Hinsichtlich der Prozesskraft F ist damit die Asymmetrie der Mechanik beseitigt oder zumindest deutlich reduziert. Dies gilt somit auch für das störende Drehmoment und die resultierende Auslenkung des Werkzeugs 2.

Damit der Werkzeughalter 1 in Y-Richtung beweglich ist, weist der Kraftrahmen 3 an seiner Unterseite eine Führung auf. Der Pneumatikzylinder 5 ist am Laufwagen 6 dieser Führung befestigt. Der Werkzeughalter 1 kann somit weiterhin vom angetriebenen Y-Laufwagen LY in Y-Richtung positioniert werden. Der Werkzeughalter 1 wird in Z-Richtung vom Linearantrieb des Z-Laufwagens positioniert, die benötigte hohe Prozesskraft F wird aber nach dem Aufsetzen des Werkzeugs 2 auf dem Werkstück vom Pneumatikzylinder 5 aufgebracht. Da diese Kraft F vom Kraftrahmen 3 aufgenommen wird, belastet sie den Linearantrieb des Z-Laufwagens LZ nicht.

Der Kraftrahmen 3 benötigt eine gewisse Steifigkeit in Z-Richtung, um die Prozesskraft F aufnehmen zu können, er muss aber nicht vollkommen steif sein, da eine gewisse Durchbiegung vom Pneumatikzylinder 5 ausgeglichen und die Prozesskraft unabhängig von der Durchbiegung eingestellt werden kann. In vielen Applikationen beträgt der Arbeitsbereich in Z-Richtung zwar einige Zentimeter (um etwa Kollisionen mit bereits in der Arbeitsebene platzierten Bauteilen zu vermeiden), der Bereich, in dem ein Bauteil mit Kraft aufgesetzt werden muss, ist aber wesentlich kleiner, etwa im Bereich einiger Millimeter. Pneumatikzylinder sind für solche Applikationen gut geeignet, da ihre Kraft nicht von der Position in Z-Richtung abhängt, sondern nur vom im Zylinder herrschenden Druck.

Auch in der Figur 3 ist die bei Belastung des Werkzeugs wirkende Kraftschleife angedeutet. Wie man durch Vergleich mit der Figur 1 erkennen kann, ist der Querbalken FY nun nicht mehr Teil dieser Kraftschleife. Das in der Figur 2 erklärte, besonders störend wirkende Drehmoment und die damit verbundene Auslenkung tritt nicht mehr auf.

Wie in der eingangs zitierten DE 102009008900 A1 näher erläutert wird, ist eine gewisse Flexibilität zwischen dem Querbalken FY eines Portalrahmens und den beiden parallelen Linearführungen FX1, FX2 notwendig, weil die beiden parallelen laufenden X-Laufwagen LX1, LX2 nie exakt gleich angesteuert werden können. Hierzu sind am Querbalken FY geeignete Schnittstellen z.B. in Form von Biegegelenken vorzusehen. Ein Nachteil des ersten Ausführungsbeispiels ist, dass diese nötige Flexibilität auch für den Kraftrahmen 3 konstruktiv berücksichtigt werden muss, was den Aufwand für so eine Lösung erhöht.

Im zweiten Ausführungsbeispiel der Figur 4 ist daher eine etwas andere Lösung für den Kraftrahmen 3 vorgeschlagen. Auch hier wird die Prozesskraft von einem oberhalb des Angriffspunktes der Prozesskraft F angeordneten Kraftrahmen 3 aufgenommen. Mittels plattenförmiger Stützen 4' ist der Kraftrahmen 3 direkt am Querbalken FY befestigt. Der Kraftrahmen 3 benötigt dann keine eigene Lösung für den Ausgleich leicht unterschiedlicher Positionierung der beiden X-Laufwagen LX1, LX2 in X-Richtung. Allerdings müssen nun die Schnittstellen des Querbalkens FY zu den X-Laufwagen LX1, LX2 die Prozesskraft F vollständig aufnehmen und deswegen entsprechend stabiler ausgeführt werden als im ersten Ausführungsbeispiel.

Ein weiterer Querträger 7 verbindet außerdem die beiden Stützplatten 4'. Er sorgt für eine höhere Steifigkeit der Anordnung und erhöht damit deren erste Eigenfrequenz.

Auch in der Figur 4 ist die wirkende Kraftschleife angedeutet. Da hier der Kraftrahmen 3 über die Platten 4' mit beiden Enden des Querbalkens FY verbunden ist, wird dieser zwar zum Bestandteil der Kraftschleife. Da die Kräfte und damit das Drehmoment aber nur ganz an den beiden Enden bzw. an den Schnittstellen zu den X-Laufwagen LX1, LX2 angreifen (im Gegensatz zum Stand der Technik, wo das Drehmoment im ungünstigsten Fall in der Mitte des Querbalkens angreift), kann durch vorsehen geeignet stabiler Gelenke zwischen dem Querbalken FY und den Laufwagen LX1 und LX2 der X-Richtung die Kraft vollständig auf die Laufwagen LX1, LX2 übertragen werden, ohne den Querbalken FY mit einem Drehmoment zu verformen.

Versuche und Simulationen haben ergeben, dass der Kraftrahmen 3 einen großen Teil der unerwünschten Auslenkung des Werkzeugs 2 verhindern kann. Aufgrund einer Asymmetrie des Werkzeughalters 1 selbst bleibt aber eine kleine Auslenkungen erhalten, die durch den Kraftrahmen 3 nicht beseitigt werden kann.

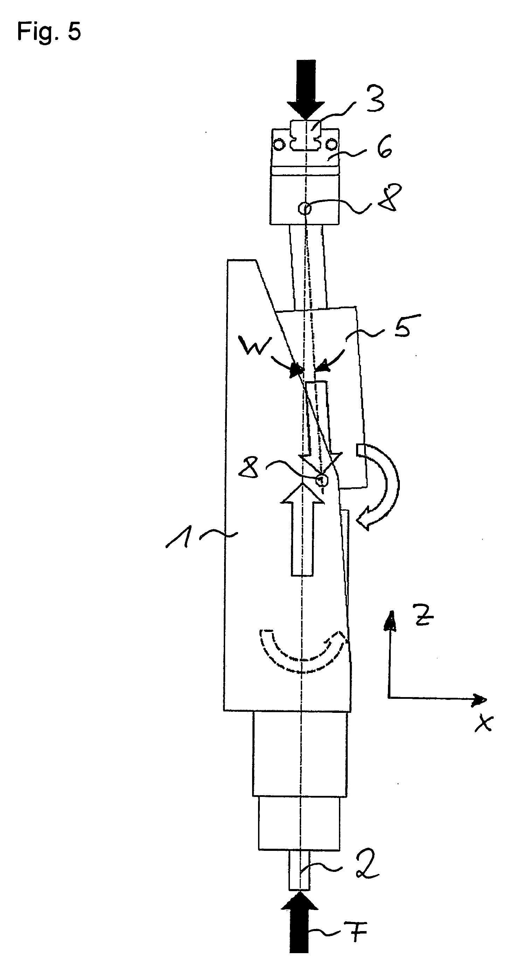

Die Figur 5 zeigt den Werkzeughalter 1, das Werkzeug 2 und den Pneumatikzylinder 5. Dieser ist mittels zweier Gelenke 8 einerseits mit dem Werkzeughalter 1 und mit dem am Kraftrahmen 3 geführten Laufwagen 6 verbunden. Weil der Werkzeughalter 1 auf einer Seite mit dem Z-Laufwagen LZ für die Z-Richtung verbunden ist und auf der gegenüberliegenden Seite wie oben geschildert eine möglichst nahe Positionierung des Werkzeugs 2 an ein zweites Werkzeug ermöglicht werden soll, ist der Werkzeughalter 1 bezüglich der Richtung der Prozesskraft F asymmetrisch ausgebildet. Diese Asymmetrie führt zu einem Drehmoment, das in der Figur 5 gestrichelt dargestellt ist, und das zu einer kleinen, aber doch störenden Auslenkung des Werkzeugs 2 führt.

Es wurde erkannt, dass durch eine um einen Winkel W geneigte Anordnung des Pneumatikzylinders 5, und den damit um einen kleinen Betrag in X-Richtung versetzten Angriffspunkt der Kraft des Pneumatikzylinders 5 am Werkzeughalter 2 ein Drehmoment erzeugt wird, das dem zuvor durch die Asymmetrie des Werkzeughalters 1 erzeugten Drehmoment gerade entgegen wirkt. Dieses durch den Versatz des Angriffspunktes erzeugte Drehmoment ist in der Figur 5 durch einen durchgezogenen, gebogenen Pfeil angedeutet. Die beiden in diesem Bereich wirkenden, gegeneinander versetzten Kräfte sind ebenfalls eingezeichnet.

An einer speziellen Maschine hat sich gezeigt, dass durch einen Winkel W von 3 Grad die unerwünschte Auslenkung des Werkzeugs W vollständig beseitigt, oder zumindest auf ein nicht störendes Maß reduziert werden kann. Diese Optimierung gilt dabei nur für einen kleinen Arbeitsbereich in Z-Richtung. Wie oben erwähnt ist dies z.B. beim Bestücken von Leiterplatten kein Problem, da trotz eines großen Verfahrbereichs der Z-Achse die problematischen Kräfte nur in einem recht kleinen Bereich auftreten, nämlich beim Aufsetzen des Bauteiles auf die Leiterplatte.

Da dieser Winkel W von der benötigten maximalen Prozesskraft F und anderen Rahmenbedingungen abhängen kann, wird außerdem vorgeschlagen, dass der Winkel W einstellbar ist. Dies könnte durch eine einfache Mechanik ermöglicht werden, mit deren Hilfe sich das untere Gelenk 8 horizontal in X-Richtung verschieben lässt. Belastet man das Werkzeug 2 mit der maximalen Prozesskraft F in Z-Richtung und misst dabei die Richtung der auftretenden Kräfte am Angriffspunkt mit einem mehrdimensionalen Kraftsensor, kann man manuell den Winkel W verändern, bis alle horizontalen Kräfte (in X- oder Y-Richtung) verschwinden, denn dann wird kein Drehmoment auf den Werkzeughalter 1 ausgeübt.

Die in der Figur 5 gezeigte Schrägstellung des Pneumatikzylinders 5 lässt sich vorteilhaft in den beiden Ausführungsbeispielen der Figuren 3 und 4 einsetzen.

Eine weitere Möglichkeit, den relativ zur Richtung der Prozesskraft F in X-Richtung versetzten Angriffspunkt der Kraft des Pneumatikzylinders 5 am Werkzeughalter 2 zu erhalten, um dem durch die Asymmetrie des Werkzeughalters 1 erzeugten Drehmoment entgegen zu wirken, besteht darin, den Pneumatikzylinder 5 zwar parallel zur Prozesskraft F zu halten, aber in X-Richtung zu versetzen, etwa indem auch des obere Gelenk 8 in der Figur 5 in X-Richtung versetzt wird, so dass es bezüglich der X-Y-Ebene oberhalb des unteren Gelenkes 8 sitzt. Der Pneumatikzylinder 5 steht dann senkrecht auf der X-Y-Ebene, ist aber bezüglich der Prozesskraft F in X-Richtung versetzt, so dass auf den Werkzeughalter 1 ein Drehmoment wirkt, das dem durch die Asymmetrie des Werkzeughalters 1 verursachten Drehmoment entgegen wirkt.

Auch diese alternative Stellung des Pneumatikzylinders 5 lässt sich mit den beiden in den Figuren 3 und 4 dargestellten Ausführungsbeispielen verwenden.

## Patentansprüche

1. Positioniereinrichtung in Portalbauweise, mit zwei parallelen Linearführungen (FX1, FX2) mit integrierten Linearantrieben, die je einen X-Laufwagen (LX1, LX2) in einer X-Richtung beweglich halten, sowie mit einem mit den beiden X-Laufwagen (LX1, LX2) verbundenen Querbalken (FY), der mittels eines integrierten Linearantriebs einen Y-Laufwagen (LY) in einer zur X-Richtung senkrechten Y-Richtung beweglich hält, sowie mit einem Werkzeughalter (1), der am Y-Laufwagen (LY) in einer zur X- und Y-Richtung senkrechten Z-Richtung geführt ist und ein Werkzeug (2) zur Bearbeitung eines in einer X-Y-Ebene angeordneten Werkstücks trägt, wobei das Werkzeug (2) in X-Richtung versetzt neben dem Querbalken (FY) angeordnet ist, **dadurch gekennzeichnet, dass** ein in Z-Richtung oberhalb des Werkzeugs (2) angeordneter Kraftrahmen (3) eine auf das Werkzeug (2) wirkende Prozesskraft (F) auf die Laufwagen (LX1, LX2) überträgt.

2. Positioniereinrichtung nach Anspruch 1, **dadurch gekennzeichnet, dass** der Kraftrahmen (3) die Prozesskraft (F) mittels Stützen (4, 4') auf die Laufwagen (LX1, LX2) überträgt, ohne den Querbalken (FY) zu verformen.

3. Positioniereinrichtung nach Anspruch 1 oder 2, **dadurch gekennzeichnet, dass** der Kraftrahmen (3) mittels Stützen (4) an den X-Laufwagen (LX1, LX2) befestigt ist.

4. Positioniereinrichtung nach Anspruch 1 oder 2, **dadurch gekennzeichnet, dass** der Kraftrahmen (3) mittels Stützen (4') an den Enden des Querbalkens (FY) befestigt ist.

5. Positioniereinrichtung nach einem der vorhergehenden Ansprüche, **dadurch gekennzeichnet, dass** die Prozesskraft (F) von einem Pneumatikzylinder (5) aufgebracht wird, der zwischen dem Kraftrahmen (3) und dem Werkzeughalter (1) wirkt, wobei der Angriffspunkt des Pneumatikzylinders (5) am Werkzeughalter (1) in X-Richtung versetzt ist zum Angriffspunkt der Prozesskraft (F) am Werkzeug (2).

6. Positioniereinrichtung nach Anspruch 5, **dadurch gekennzeichnet, dass** der Versatz in X-Richtung zwischen dem Angriffspunkt des Pneumatikzylinders (5) am Werkzeughalter (1) und dem Angriffspunkt der Prozesskraft (F) am Werkzeug (2) so gewählt ist, dass bei einer Beaufschlagung des Werkzeugs (2) mit der Prozesskraft (F) in Z-Richtung alle Kräfte in X- oder Y-Richtung verschwinden.

7. Positioniereinrichtung nach Anspruch 5 oder 6, **dadurch gekennzeichnet, dass** der Versatz in X-Richtung zwischen dem Angriffspunkt des Pneumatikzylinders (5) am Werkzeughalter (1) und dem Angriffspunkt der Prozesskraft (F) am Werkzeug (2) durch eine Verkippung des Pneumatikzylinders (5) um einen Winkel (W) zur Z-Richtung erzeugt ist.

8. Positioniereinrichtung nach Anspruch 5 oder 6, **dadurch gekennzeichnet, dass** der Versatz in X-Richtung zwischen dem Angriffspunkt des Pneumatikzylinders (5) am Werkzeughalter (1) und dem Angriffspunkt der Prozesskraft (F) am Werkzeug (2) durch die Anordnung des Pneumatikzylinder (5) parallel zur Z-Richtung, aber in X-Richtung versetzt zur Prozesskraft (F) erzeugt ist.

9. Positioniereinrichtung nach einem der Ansprüche 5 - 8, **dadurch gekennzeichnet, dass** der Versatz in X-Richtung zwischen dem Angriffspunkt des Pneumatikzylinders (5) am Werkzeughalter (1) und dem Angriffspunkt der Prozesskraft (F) am Werkzeug (2) einstellbar ist.

## Claims

1. Positioning device of portal design, having two parallel linear guides (FX1, FX2) with integrated linear drives, which each hold an X carriage (LX1, LX2) in a movable manner in an X direction, and also having a crossbeam (FY) connected to the two X carriages (LX1, LX2), said crossbeam (FY) holding a Y carriage (LY) in a movable manner in a Y direction perpendicular to the X direction by means of an integrated linear drive, and also having a tool holder (1) which is glided on the Y carriage (LY) in a Z direction perpendicular to the X and Y directions and carries a tool (2) for machining a workpiece arranged in an X-Y plane, wherein the tool (2) is arranged next to the crossbeam (FY) in a manner offset in the X direction, **characterized in that** a force frame (3) arranged in the Z direction above the tool (2) transmits a process force (F), acting on the tool (2), to the carriages (LX1, LX2).

2. Positioning device according to Claim 1, **characterized in that** the force frame (3) transmits the process force (F) to the carriages (LX1, LX2) by means of supports (4, 4'), without deforming the crossbeam (FY).

3. Positioning device according to Claim 1 or 2, **characterized in that** the force frame (3) is fastened to the X carriage (LX1, LX2) by means of supports (4).

4. Positioning device according to Claim 1 or 2, **characterized in that** the force frame (3) is fastened to the ends of the crossbeam (FY) by means of supports (4').

5. Positioning device according to one of the preceding claims, **characterized in that** the process force (F) is applied by a pneumatic cylinder (5) which acts between the force frame (3) and the tool holder (1), wherein the point of application of the pneumatic cylinder (5) on the tool holder (1) is offset in the X direction with respect to the point of application of the process force (F) on the tool (2).

6. Positioning device according to Claim 5, **characterized in that** the offset in the X direction between the point of application of the pneumatic cylinder (5) on the tool holder (1) and the point of application of the process force (F) on the tool (2) is selected such that, when the tool (2) is subjected to the process force (F) in the Z direction, all forces in the X or Y direction disappear.

7. Positioning device according to Claim 5 or 6, **characterized in that** the offset in the X direction between the point of application of the pneumatic cylinder (5) on the tool holder (1) and the point of application of the process force (F) on the tool (2) is produced by tilting of the pneumatic cylinder (5) through an angle (W) with respect to the Z direction.

8. Positioning device according to Claim 5 or 6, **characterized in that** the offset in the X direction between the point of application of the pneumatic cylinder (5) on the tool holder (1) and the point of application of the process force (F) on the tool (2) is produced by the arrangement of the pneumatic cylinder (5) parallel to the Z direction but offset in the X direction with respect to the process force (F).

9. Positioning device according to one of Claims 5-8, **characterized in that** the offset in the X direction between the point of application of the pneumatic cylinder (5) on the tool holder (1) and the point of application of the process force (F) on the tool (2) is settable.

## Revendications

1. Dispositif de positionnement de construction en portique, comprenant deux guides linéaires parallèles (FX1, FX2) avec des entraînements linéaires intégrés, qui retiennent chacun, de manière déplaçable dans une direction X, un chariot X (LX1, LX2), et comprenant une poutre transversale (FY) connectée aux deux chariots X (LX1, LX2), laquelle retient de manière déplaçable dans une direction Y perpendiculaire à la direction X un chariot Y (LY) au moyen d'un entraînement linéaire intégré, et comprenant un porte-outil (1) qui est guidé sur le chariot Y (LY) dans une direction Z perpendiculaire aux directions X et Y et qui porte un outil (2) pour l'usinage d'une pièce disposée dans un plan X-Y, l'outil (2) étant disposé, décalé dans la direction X, à côté de la poutre transversale (FY), **caractérisé en ce qu'**un cadre de force (3) disposé dans la direction Z au-dessus de l'outil (2) transmet une force de processus (F) agissant sur l'outil (2) aux chariots (LX1, LX2).

2. Dispositif de positionnement selon la revendication 1, **caractérisé en ce que** le cadre de force (3) transmet la force de processus (F) au moyen de supports (4, 4') aux chariots (LX1, LX2) sans déformer la poutre transversale (FY).

3. Dispositif de positionnement selon la revendication 1 ou 2, **caractérisé en ce que** le cadre de force (3) est fixé au moyen de supports (4) aux chariots X (LX1, LX2).

4. Dispositif de positionnement selon la revendication 1 ou 2, **caractérisé en ce que** le cadre de force (3) est fixé au moyen de supports (4') aux extrémités de la poutre transversale (FY).

5. Dispositif de positionnement selon l'une quelconque des revendications précédentes, **caractérisé en ce que** la force de processus (F) est appliquée par un cylindre pneumatique (5) qui agit entre le cadre de force (3) et le porte-outil (1), le point d'application du cylindre pneumatique (5) contre le porte-outil (1) étant décalé dans la direction X par rapport au point d'application de la force de processus (F) sur l'outil (2).

6. Dispositif de positionnement selon la revendication 5, **caractérisé en ce que** le décalage dans la direction X entre le point d'application du cylindre pneumatique (5) contre le porte-outil (1) et le point d'application de la force de processus (F) contre l'outil (2) est choisi de telle sorte que dans le cas d'une sollicitation de l'outil (2) par la force de processus (F) dans la direction Z, toutes les forces dans la direction X ou dans la direction Y disparaissent.

7. Dispositif de positionnement selon la revendication 5 ou 6, **caractérisé en ce que** le décalage dans la direction X entre le point d'application du cylindre pneumatique (5) contre le porte-outil (1) et le point d'application de la force de processus (F) contre l'outil (2) est généré par un basculement du cylindre pneumatique (5) suivant un angle (W) par rapport à la direction Z.

8. Dispositif de positionnement selon la revendication 5 ou 6, **caractérisé en ce que** le décalage dans la direction X entre le point d'application du cylindre pneumatique (5) contre le porte-outil (1) et le point d'application de la force de processus (F) contre l'outil (2) est généré par l'agencement du cylindre pneumatique (5) parallèlement à la direction Z, mais de manière décalée dans la direction X par rapport à la force de processus (F).

9. Dispositif de positionnement selon l'une quelconque des revendications 5 à 8, **caractérisé en ce que** le décalage dans la direction X entre le point d'application du cylindre pneumatique (5) contre le porte-outil (1) et le point d'application de la force de processus (F) contre l'outil (2) peut être ajusté.
